# EUROPÄISCHE PATENTANMELDUNG

(11) **EP 1 405 789 A1**
(43) Veröffentlichungstag der Anmeldung: **07.04.2004**
(21) Anmeldenummer: 02022409.3
(22) Anmeldetag: 04.10.2002
(51) Int. Cl.: B64D 47/06, F21S 8/10, F21V 5/00

(54) **Anti-Kollisions-Leuchte für Luftfahrzeuge**

(71) Anmelder: Goodrich Hella Aerospace Lighting Systems GmbH, 59557 Lippstadt (DE)
(72) Erfinder: Ganzer, Bernd, 59597 Erwitte (DE); Schulz, Rico, 59558 Rixbeck (DE)
(74) Vertreter: Hilleringmann, Jochen, Dipl.-Ing.

(57) **Zusammenfassung**

Die Anti-Kollisions-Leuchte für Luftfahrzeuge, insbesondere Flugzeuge, ist versehen mit einem Haltekörper (12) mit einer Außenseite und mehreren an der Außenseite des Haltekörpers (12) angeordneten LEDs (16), deren Lichtabstrahlrichtungen von dem Haltekörper (12) wegweisen. Ferner ist die Anti-Kollisions-Leuchte versehen mit einer Ansteuereinheit (18) zur impulsartigen Ansteuerung zumindest einiger der LEDs (16) und einem refraktiven optischen Element (26) zur Erzeugung einer gewünschten räumlichen Verteilung des Lichts der LEDs (16), wobei das refraktive optische Element (26) den Haltekörper zumindest im Bereich der LEDs (16) umgibt.

## Beschreibung

Die Erfindung betrifft eine Anti-Kollisions-Leuchte für Luftfahrzeuge und insbesondere für Flugzeuge und Hubschrauber.

Es ist bekannt, Leuchten im Außenbereich eines Flugzeugs, beispielsweise Positionsleuchten und Anti-Kollisions-Leuchten mit Glühlampen (entweder mit Heizwendel oder als Gasentladungslampen) ausgestattet. Derartige Glühlampen haben eine relativ geringe Lebensdauer und sind insbesondere anfällig bezüglich Vibrationen.

Deshalb geht man mehr und mehr dazu über, für die Außenbeleuchtung von Flugzeugen Leuchtdioden (LEDs) einzusetzen, und zwar in Form einzelner LEDs oder LED-Module, die einen Halbleiter-Chip mit einer Vielzahl von lichtemittierenden Bereichen aufweisen. Ein gewisser Nachteil der Verwendung von Leuchtdioden besteht in deren räumlich begrenzten Lichtausbreitungsrichtung (über im Regelfall 120° bis 140° große Raumwinkel), wohingegen Glühlampen im gesamten Raum Licht abstrahlen. Dieses Licht wird bei mit Glühlampen ausgestatteten Außenleuchten von Flugzeugen bzw. Luftfahrzeugen mittels Reflektoren in die gewünschte Vorzugsrichtung gerichtet, um bezüglich Intensität und Lichtverteilung den international bzw. jeweils national gültigen Mindestvorgaben zu genügen. Dabei können die geforderten horizontalen und vertikalen Lichtintensitäts-Verteilungsprofile nicht genau genug abbilden, was bedeutet, dass die mit herkömmlichen Glühlampen ausgestatteten Außenbeleuchtungen von Luftfahrzeugen zur Erfüllung der Auflagen innerhalb des einen Raumwinkelbereichs in den übrigen Raumwinkelbereichen eine weit über den Anforderungen liegende Lichtintensität abgeben.

Mit dem Einsatz von LEDs kann diesbezüglich Abhilfe geschaffen werden. Allerdings bereitet der begrenzte Lichtabstrahlungswinkel der LEDs diesbezüglich ebenfalls Probleme.

Der Erfindung liegt die Aufgabe zugrunde, eine Anti-Kollisions-Leuchte für Luftfahrzeuge, insbesondere Flugzeuge, zu schaffen, die über ein vereinfachtes System zur Lichtverteilung im Raum verfügt.

Zur Lösung dieser Aufgabe wird mit der Erfindung eine Anti-Kollisions-Leuchte für Luftfahrzeuge, insbesondere Flugzeuge, vorgeschlagen, die versehen ist mit
- einem Haltekörper mit einer Außenseite,
- mehreren an der Außenseite des Haltekörpers angeordneten LEDs, deren Lichtabstrahlrichtungen von dem Haltekörper wegweisen,
- einer Ansteuereinheit zur impulsartigen Ansteuerung zumindest einiger der LEDs und
- einem refraktiven optischen Element zur Erzeugung einer gewünschten räumlichen Verteilung des Lichts der LEDs,
- wobei das refraktive optische Element den Haltekörper zumindest im Bereich der LEDs umgibt.

Erfindungsgemäß wird also bei der hier zu beschreibenden Anti-Kollisions-Leuchte ein refraktives optisches Element, also beispielsweise ein Linsensystem, eingesetzt, um die für Anti-Kollisions-Leuchten erforderliche vertikale Lichtverteilung zu erzielen. Dieses refraktive optische Element umgibt einen mehrere LEDs haltenden Haltekörper zumindest in demjenigen Bereich, in dem die LEDs an dem Haltekörper angeordnet sind. Der Haltekörper selbst weist eine Außenseite auf, auf der sich die LEDs befinden, und zwar entweder zur Rundum-Lichtabgabe oder lediglich in einem Teil der Außenfläche zur Lichtabgabe in einem Teilbereich. Die LEDs werden von einer Ansteuereinheit impulsartig angesteuert. Es ist denkbar, dass nicht sämtliche LEDs während eines Impulsbetriebs arbeiten. Zweckmäßig ist es, wenn die Anti-Kollisions-Leuchte so ausgelegt ist, dass auch bei Ausfall einer LED bzw. eines LED-Moduls bezogen auf die horizontale Lichtintensitätsverteilung noch genügend Licht abgegeben wird.

In vorteilhafter Weiterbildung der Erfindung ist vorgesehen, dass das refraktive optische Element als sphärische oder asphärische Linse oder als Zylinder-, Freiform- oder Fresnellinse ausgebildet ist. Alternative Ausgestaltungen des refraktiven optischen Elements sind beispielsweise Prismenstrukturen, die wie Linsen der Lichtlenkung dienen.

Wie jede Leuchte so weist auch eine Anti-Kollisions-Leuchte eine sogenannte Lichtscheibe auf, die den Bereich, aus dem aus der Leuchte Licht austritt, von der Umgebung trennt. Zweckmäßig ist es, wenn das refraktive optische Element zugleich als Lichtscheibe ausgebildet ist, sodass sich die Gesamtzahl an Einzelkomponenten der Anti-Kollisions-Leuchte entsprechend reduziert.

In vorteilhafter Weiterbildung der Erfindung ist vorgesehen, dass die LEDs an längs umlaufenden Flächen am Haltekörper angeordnet und auf mindestens zwei zueinander parallele Ebenen aufgeteilt sind. Alternativ können die LEDs auch lediglich in einer gemeinsamen Ebene angeordnet sein. Innerhalb dieser Ebene bzw. Ebenen bestimmen die LEDs die horizontale Lichtintensitätsverteilung, die über 360° konstant sein und eine Mindestgröße aufweisen sollte.

Bei Anordnung der LEDs in mehreren Ebenen ist es vorteilhaft, wenn den LEDs der einzelnen Ebenen unterschiedliche Bereiche des refraktiven optischen Elements zugeordnet sind. Innerhalb dieser Bereiche kann die optische Wirkung des refraktiven optischen Elements gleich oder unterschiedlich sein. Letzteres macht es möglich, durch entsprechende Ausgestaltungen dieser Bereiche beliebige (vertikale) Lichtintensitätsverteilungen zu generieren. Dadurch ist es möglich, durch Einsatz verschieden geformter refraktiver optischer Elemente ein und denselben Haltekörper mitsamt der Vielzahl von LEDs an unterschiedliche (vertikale) Lichtintensitätsverteilungen anpassen zu können.

In vorteilhafter Weiterbildung der Erfindung ist ferner vorgesehen, wenn das refraktive optische Element als Kappenelement ausgebildet ist, das über den Haltekörper gestülpt ist und einen Deckelbereich sowie einen sich daran anschließenden umlaufenden Randbereich aufweist, der die Vielzahl von LEDs umgibt und ggf. bis in den Übergangsbereich zum Deckelbereich hin die refraktiven optischen Eigenschaften aufweist.

Als LED lassen sich Einzel-LEDs einsetzen, die pro Gehäuse ein Halbleitersubstrat mit einem einzigen lichtaussendenden Bereich aufweisen und einzeln gehäust sind; alternativ bzw. bevorzugt ist es jedoch, LED-Module einzusetzen, die pro Gehäuse ein Halbleitersubstrat mit einer Vielzahl von insbesondere in Arrayform angeordneter lichtaussendender Bereiche aufweisen.

Vorteilhafterweise ist die Außenseite des Haltekörpers zumindest in einem Teilbereich zylindrisch. Diese Außenfläche muss nicht notwendigerweise kreiszylindrisch sein, wird aber bevorzugt im wesentlichen kreiszylindrisch ausgebildet sein. Alternative Ausgestaltungen sind beispielsweise ein elliptischer Verlauf der zylindrischen Außenfläche. Im Rahmen dieser Erfindung ist daher unter "zylindrischer Fläche" eine Fläche zu verstehen, die im mathematischen Sinne zylindrisch ist, also von einer Geraden aufgespannt ist, wenn diese Gerade längs einer geschlossenen (Leit-)Kurve verschoben wird.

Die Erfindung wird nachfolgend anhand diverser Ausführungsbeispiele unter Bezugnahme auf die Zeichnung näher erläutert. Im einzelnen zeigen:
- Fig. 1: einen Diagonalquerschnitt durch ein erstes Ausführungsbeispiel einer Anti-Kollisions-Leuchte für ein Flugzeug,
- Fig. 2: einen Diagonalquerschnitt durch ein zweites Ausführungsbeispiel einer Anti-Kollisions-Leuchte für ein Flugzeug,
- Fig. 3: einen Diagonalquerschnitt durch ein drittes Ausführungsbeispiel einer Anti-Kollisions-Leuchte für ein Flugzeug.

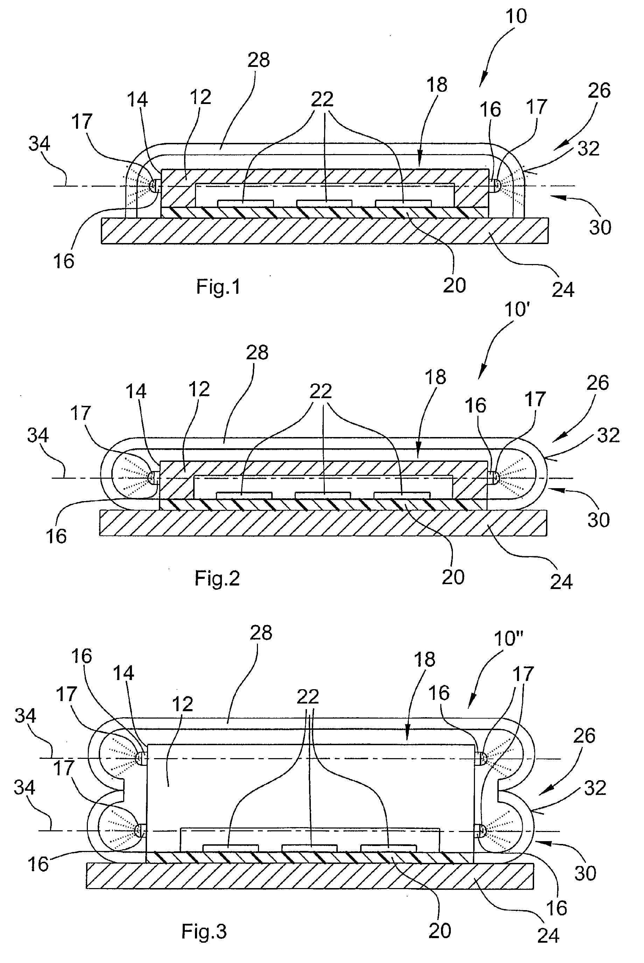

Fig. 1 zeigt ein erstes Ausführungsbeispiel 10 einer Anti-Kollisions-Leuchte für Flugzeuge. Die Leuchte 10 weist einen scheibenförmigen Haltekörper 12 auf, der mit einer zylindrischen Außenfläche 14 versehen ist. Auf dieser Außenfläche 14 befinden sich eine Vielzahl von LEDs bzw. LED-Modulen 16 mit als optische Linsen 17 wirkenden Gehäusen, die ihr Licht radial auswärts gerichtet abgeben. Diese LEDs 16 arbeiten im Pulsbetrieb und werden zu diesem Zweck von einer Ansteuereinheit 18 mit mehreren auf einer Trägerplatte 20 angeordneten elektrischen bzw. elektronischen Schaltungskomponenten 22 angesteuert. Die Trägerplatte 20 und der Haltekörper 12 ruhen auf einer Halteplatte 24.

Über den Haltekörper 12 ist ein refraktives optisches Element 26 aus einem lichtdurchlässigen Material gestülpt, das als Kappenelement mit einem Deckelbereich 28 und einem Randbereich 30 mit einer im wesentlichen zylindrischen Außenfläche 32 versehen ist. Innerhalb des Randbereiches 30 sowie ggf. auch im Übergangsbereich zum Deckelbereich 28 weist das optische Element 26 refraktive Eigenschaften auf, die derart gewählt sind, dass sich in vertikaler Richtung, also senkrecht zur Ebene 34, innerhalb derer die LEDs 16 entlang der umlaufenden zylindrischen Außenfläche 14 angeordnet sind, eine gewünschte Lichtintensitätsverteilung einstellt.

Fig. 2 zeigt eine alternative Ausgestaltung einer Anti-Kollisions-Leuchte 10', deren Einzelbestandteile in Fig. 2 mit den gleichen Bezugszeichen wie im Falle der Leuchte 10 der Fig. 1 bezeichnet sind, sofern sie identisch bzw. gleichwirkend sind.

Der Unterschied der Anti-Kollisions-Leuchte 10' der Fig. 2 gegenüber derjenigen der Fig. 1 besteht in der Ausbildung des Randbereichs 30 des kappenartigen refraktiven optischen Elements 26. Während beim Ausführungsbeispiel gemäß Fig. 1 die Außenseite des optischen Elements 26 im Randbereich 30 im wesentlichen zylindrisch ist, weist der Randbereich des kappenartigen optischen Elements der Leuchte 10' der Fig. 2 eine konvex gewölbten Außenfläche 32 auf.

In Fig. 3 ist ein weiteres Ausführungsbeispiel einer Anti-Kollisions-Leuchte 10" dargestellt. Auch hier gilt, dass in der Fig. 3 die gleichen Bezugszeichen wie in den Fign. 1 und 2 verwendet sind, sofern die im einzelnen bezeichneten Elemente bzw. Teile identisch bzw. gleichwirkend sind.

Die Besonderheit der Anti-Kollisions-Leuchte 10" der Fig. 3 besteht darin, dass die Leuchtdioden 16 innerhalb zweier zueinander paralleler Ebenen 34 angeordnet sind. Jeder Ebene 34 von Leuchtdioden 16 ist ein separater Abschnitt 36,38 des Randbereichs 30 des kappenförmigen optischen Elements 26 zugeordnet. In beiden Bereichen 36,38 weist die Außenfläche 32 des Randbereichs 30 nach außen gewölbte Abschnitte auf, die sich ggf. in Form und in der radialen Erstreckung voneinander unterscheiden. Beide konvex geformten Bereiche 36,38 können beispielsweise auch identisch sein.

## Patentansprüche

1. Anti-Kollisions-Leuchte für Luftfahrzeuge, insbesondere Flugzeuge, mit
- einem Haltekörper (12) mit einer Außenseite,
- mehreren an der Außenseite des Haltekörpers (12) angeordneten LEDs (16), deren Lichtabstrahlrichtungen von dem Haltekörper (12) wegweisen,
- einer Ansteuereinheit (18) zur impulsartigen Ansteuerung zumindest einiger der LEDs (16) und
- einem refraktiven optischen Element (26) zur Erzeugung einer gewünschten räumlichen Verteilung des Lichts der LEDs (16),
- wobei das refraktive optische Element (26) den Haltekörper zumindest im Bereich der LEDs (16) umgibt.

2. Anti-Kollisions-Leuchte nach Anspruch 1, **dadurch gekennzeichnet, dass** die LEDs (16) in einer gemeinsamen Ebene (34) angeordnet sind.

3. Anti-Kollisions-Leuchte nach Anspruch 1 oder 2, **dadurch gekennzeichnet, dass** das refraktive optische Element (26) als Linse, insbesondere als sphärische oder asphärische Linse oder als Zylinder-, Freiform- oder Fresnellinse ausgebildet ist.

4. Anti-Kollisions-Leuchte nach einem der Ansprüche 1 bis 3, **dadurch gekennzeichnet, dass** das refraktive optische Element (26) als den Haltekörper (12) überdeckendes Kappenelement mit einem umlaufenden Randbereich (30) ausgebildet ist, der refraktive optische Eigenschaften aufweist.

5. Anti-Kollisions-Leuchte nach einem der Ansprüche 1 bis 4, **dadurch gekennzeichnet, dass** die LEDs in mindestens zwei zueinander parallelen Ebenen (34) angeordnet sind.

6. Anti-Kollisions-Leuchte nach Anspruch 5, **dadurch gekennzeichnet, dass** jeder Ebene (34) ein anderer Bereich (36, 38) des refraktiven optischen Elements (26) zugeordnet ist.

7. Anti-Kollisions-Leuchte nach Anspruch 6, **dadurch gekennzeichnet, dass** die optischen Eigenschaften der einzelnen Bereiche (36, 38) des refraktiven optischen Elements (26) unterschiedlich sind.

8. Anti-Kollisions-Leuchte nach einem der Ansprüche 1 bis 7, **dadurch gekennzeichnet, dass** die Lichtintensitätsverteilung zu beiden Seiten der durch die LEDs (16) definierten Ebene (34) oder der Aufeinanderfolge von durch die LEDs (16) definierten Ebenen (34) symmetrisch ist.

9. Anti-Kollisions-Leuchte nach einem der Ansprüche 1 bis 8, **dadurch gekennzeichnet, dass** die LEDs (16) mit Linsen (17) versehen sind.

10. Anti-Kollisions-Leuchte nach einem der Ansprüche 1 bis 9, **dadurch gekennzeichnet, dass** die LEDs (16) einzelne lichtaussendende Bereiche aufweisen und dass mehrere derartige Bereiche zu jeweils einem LED-Modul zusammengefasst sind.
